# FASCICULE DE BREVET EUROPEEN

(11) **EP 1 693 265 B1**
(45) Date de publication et mention de la délivrance du brevet: **24.06.2009**
(21) Numéro de dépôt: 06002111.0
(22) Date de dépôt: 02.02.2006
(51) Int. Cl.: B60T 13/567

(54) **Tirant de fixation pour servomoteur d'assistance au freinage d'un vehicule**
Haltebolzen für einen Bremskraftverstärker für ein Fahrzeug
Fixation bolt for a brake booster for a vehicle

(30) Priorité: 18.02.2005 FR 0501809
(43) Date de publication de la demande: 23.08.2006
(73) Titulaire: ROBERT BOSCH GMBH, 70442 Stuttgart (DE)
(72) Inventeur: Michon, Jean-Pierre, 77178 Saint Pathus (FR); Leboisne, Cédric, 94130 Nogent sur Marne (FR)
(74) Mandataire: Hurwic, Aleksander Wiktor

(56) Documents cités:
- WO-A-20/05002940
- US-A- 5 410 880
- US-B1- 6 651 548

## Description

L'invention concerne un tirant de fixation d'un servomoteur d'assistance au freinage d'un véhicule sur le tablier du compartiment moteur de ce véhicule. L'invention concerne également un servomoteur muni d'un tel tirant ainsi que l'ensemble d'un système de fixation utilisant un tel tirant de fixation.

L'invention concerne également un procédé de montage d'un tel système de fixation et notamment du montage d'un servomoteur d'assistance au freinage et d'un maître cylindre de frein sur le tablier intérieure du compartiment moteur d'un véhicule.

US-A-6651 546 décrit un tirant comportant une pluralité de filetages.

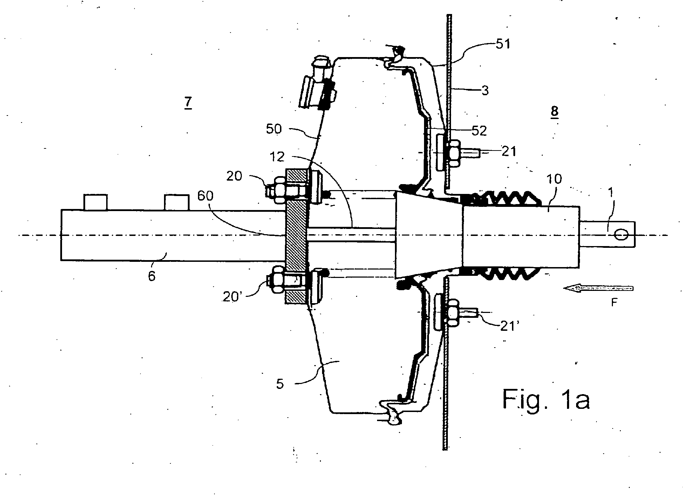

Dans un véhicule automobile, comme cela est représenté sur la figure 1a, le servomoteur d'assistance au freinage 5 est généralement placé dans le compartiment avant du véhicule, lequel est généralement le compartiment moteur. Le boîtier du servomoteur comporte une paroi avant 50 et une paroi arrière 51. A l'intérieur du boîtier se trouve la jupe 52 qui permet comme cela est connu dans la technique, de retransmettre des efforts F transmis par une tige de commande 1 et un piston 10 à une tige de poussée 12 laquelle communique les efforts au maître cylindre 6.

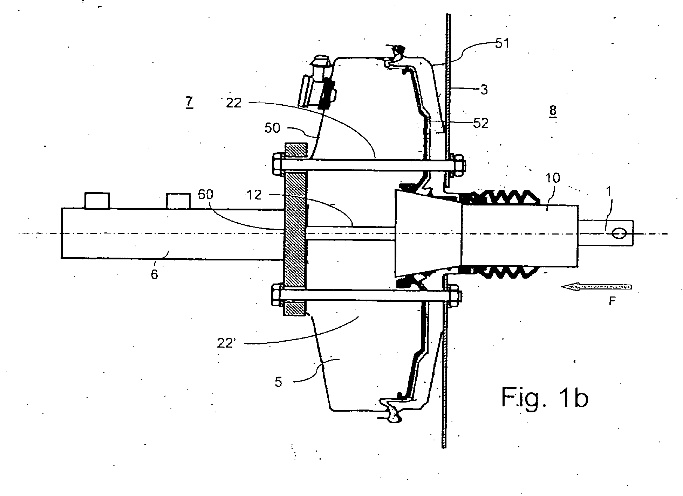

Il est connu dans la technique de fixer le servomoteur au tablier 3 qui sépare le compartiment avant 7 du véhicule de la cabine 8 du conducteur. Une partie du servomoteur traverse le tablier 3 et notamment la tige de commande 1 pour qu'elle puisse être commandée par la pédale de frein lorsque celle-ci est actionnée par le conducteur. Selon l'exemple de la figure 1, la paroi arrière 51 du servomoteur est fixée par des dispositifs à vis et écrous 21 et 21'.

En ce qui concerne le maître cylindre 6, il est fixé à la paroi avant 50 du servomoteur par des dispositifs à vis et à écrous 20 et 20'.

Selon le mode de fixation de la figure 1b, les vis des dispositifs 20 et 21 sont en une même tige ou tirant 22. De même pour les vis des dispositifs 21 et 21' qui sont faites dans la tige ou tirant 22'. Les tirants 22 et 22' ont alors comme fonction première de rigidifier axialement le servomoteur. De manière avantageuse, ils servent également pour la fixation du servomoteur et du maître cylindre sur le tablier qui sépare le compartiment moteur de la cabine du conducteur.

Cependant le montage de ces dispositifs nécessite souvent l'intervention de deux opérateurs pour, d'une part, maintenir le servomoteur plaqué en position, dans le compartiment moteur, contre le tablier 3 qui sépare le compartiment moteur 7 de la cabine de conduite 8 et pour, d'autre part, visser des écrous de fixation à l'intérieur de la cabine de conduite. L'invention a pour but de résoudre cet inconvénient.

L'invention concerne donc un tirant de fixation d'un servomoteur d'assistance au freinage de véhicule destiné au montage d'un servomoteur sur le tablier d'un compartiment d'un véhicule, par une paroi arrière du servomoteur. Ce système permet également le-montage d'un maître cylindre de commande de freinage sur une paroi avant dudit servomoteur. Ledit tirant traverse les parois avant et arrière du servomoteur et comporte une première extrémité destinée à être fixée audit tablier du compartiment du véhicule et une deuxième extrémité destinée à permettre la fixation dudit maître cylindre à la paroi avant du servomoteur.

La première extrémité du tirant de fixation comporte:
- un premier filetage destiné à être vissé dans ladite paroi du compartiment du véhicule ou dans une pièce solidaire de cette paroi,
- un épaulement destiné à être placé à l'intérieur du servomoteur et à s'appuyer contre la paroi arrière du servomoteur,

La deuxième extrémité du tirant de fixation comporte:
- un deuxième filetage prévu pour recevoir un premier écrou destiné à être placé à l'intérieur du servomoteur et à s'appuyer contre la paroi avant du servomoteur,
- un troisième filetage prévu pour recevoir un deuxième écrou destiné à être situé à l'extérieur du servomoteur et à plaquer le maître cylindre contre la paroi avant du servomoteur.

Selon une forme de réalisation, le deuxième filetage possède un pas dont le sens est selon un premier sens et ce que le premier filetage et le troisième filetage ont des sens inverses au premier sens.

Le premier écrou est alors, de préférence, destiné à être immobilisé en rotation par une -pièce d'immobilisatiom (fixée sur la paroi avant du servomoteur.

Le troisième filetage peut être réalisé sur une pièce vissée ou montée en force sur la deuxième extrémité du tirant.

Avantageusement, avant montage, le premier écrou est monté sur le tirant dans une position qui permet son déplacement sur le tirant pour qu'après montage il se trouve plaqué contre la paroi avant du servomoteur.

Selon une autre forme de réalisation, les trois filetages ont le même sens.

De préférence, la position du premier écrou sur le tirant avant montage correspond alors à la position que cet écrou doit avoir dans le servomoteur après montage du servomoteur sur le tablier du compartiment du véhicule.

Avantageusement, le deuxième filetage et le troisième filetage sont réalisés en un même filetage.

Selon une variante de réalisation de l'invention, le troisième filetage est réalisé sur une pièce montée sur le tirant en bout du deuxième filetage, ou est monté sur ledit deuxième filetage.

La pièce portant le troisième filetage peut comporter alors un épaulement situé du côté opposé au tirant.

La position du premier écrou sur le tirant avant montage du servomoteur correspond alors avantageusement à la position que cet écrou doit avoir dans le servomoteur après montage du servomoteur sur le tablier du compartiment du véhicule.

De plus, il peut être prévu, dans le tirant, un trou transversal destiné à recevoir une goupille d'immobilisation provisoire qui elle-même est destinée à traverser le deuxième écrou et le tirant pour solidariser le deuxième écrou avec le tirant et pour permettre le vissage du premier filetage dans le tablier du compartiment du véhicule. Cette goupille est de préférence en matériau cassable de telle sorte, qu'au-delà d'un certain effort de vissage, elle se rompt et que le deuxième écrou est désolidarisé du tirant.

L'invention est également applicable à un servomoteur d'assistance au freinage d'un véhicule appliquant le tirant de fixation ainsi décrit. Le tirant traverse les parois avant et arrière du servomoteur avec la première extrémité destinée à être fixée au tablier du compartiment du véhicule et la deuxième extrémité destinée à permettre la fixation dudit maître cylindre à la paroi avant du servomoteur. Le premier filetage de la première extrémité est destiné à être vissé dans le tablier du compartiment du véhicule ou dans une, pièce solidaire de ce tablier. L'épaulement est placé à l'intérieur du servomoteur et s'appuie contre la paroi arrière du servomoteur. Le deuxième filetage de la deuxième extrémité du tirant de fixation est prévu pour recevoir le premier écrou qui est destiné à s'appuyer à l'intérieur du servomoteur contre la paroi avant du servomoteur. Le troisième filetage prévu pour recevoir le deuxième écrou est situé à l'extérieur du servomoteur pour permettre le plaquage du maître cylindre (6) contre la paroi avant du servomoteur.

L'invention est applicable à un système de fixation appliquant le tirant ainsi que le servomoteur précédents. Dans ce système, le tablier du compartiment du véhicule ou une pièce solidaire du tablier du compartiment du véhicule comporte un trou taraudé permettant le vissage du premier filetage du tirant.

L'invention est applicable à un système de fixation appliquant le tirant et le servomoteur précédents dans lequel le maître cylindre comporte deux pattes de fixation opposées par rapport à l'axe du maître cylindre et possédant chacune une ouverture prévue pour être placée autour du tirant de façon que le deuxième écrou du tirant puisse prendre appui sur la patte de fixation. Lesdites ouvertures des deux pattes de fixation sont ouvertes de façon à permettre une rotation du maître cylindre autour de son axe.

L'invention concerne également un procédé de montage du tirant ainsi décrit. Ce procédé de montage est applicable au servomoteur et au système de fixation selon l'invention. Ce procédé se fait selon un processus selon lequel:
- on monte le tirant dans le servomoteur avec le premier filetage émergeant de la face arrière du servomoteur, avec l'épaulement à l'intérieur du servomoteur, avec le premier écrou monté sur le deuxième filetage et placé à l'intérieur du servomoteur et avec le troisième filetage émergeant de la face avant du servomoteur,
- on présente l'extrémité libre du premier filetage dans un trou fileté du tablier du compartiment du véhicule,
- on visse le premier filetage dans ledit trou à l'aide du deuxième écrou jusqu'à ce que ledit épaulement bloque la paroi arrière du servomoteur contre le tablier du compartiment du véhicule, le premier écrou venant se plaquer contre la paroi avant du servomoteur,
- on visse le deuxième écrou de façon à bloquer le maître cylindre et la paroi avant du servomoteur contre le premier écrou.

Avantageusement, la dernière étape de vissage du deuxième écrou se fait après rupture d'une goupille d'immobilisation temporaire placée en travers dudit deuxième écrou et en travers du tirant pour permettre lors du vissage du premier filetage dans le tablier du compartiment du véhicule d'utiliser le deuxième écrou comme dispositif de commande de rotation du tirant.

Les différents objets et caractéristiques de l'invention apparaîtront plus clairement dans la description qui va suivre et dans les figures annexées qui représentent:
- les figures 1a et 1b, des dispositifs de fixation connus dans la technique et décrits précédemment,
- les figures 2a à 2c, un exemple de réalisation d'un tirant de fixation selon l'invention et du système de fixation,
- les figures 3a à 3c, une variante de réalisation du système de fixation des figures 2a à 2c,
- les figures 4a à 4c, une autre forme de réalisation du tirant selon l'invention,
- les figures 5a à 5d, une variante de réalisation du système de fixation des figures 4a à 4c,
- la figure 6, un mode de fixation d'un maître cylindre de frein sur un servomoteur d'assistance au freinage.

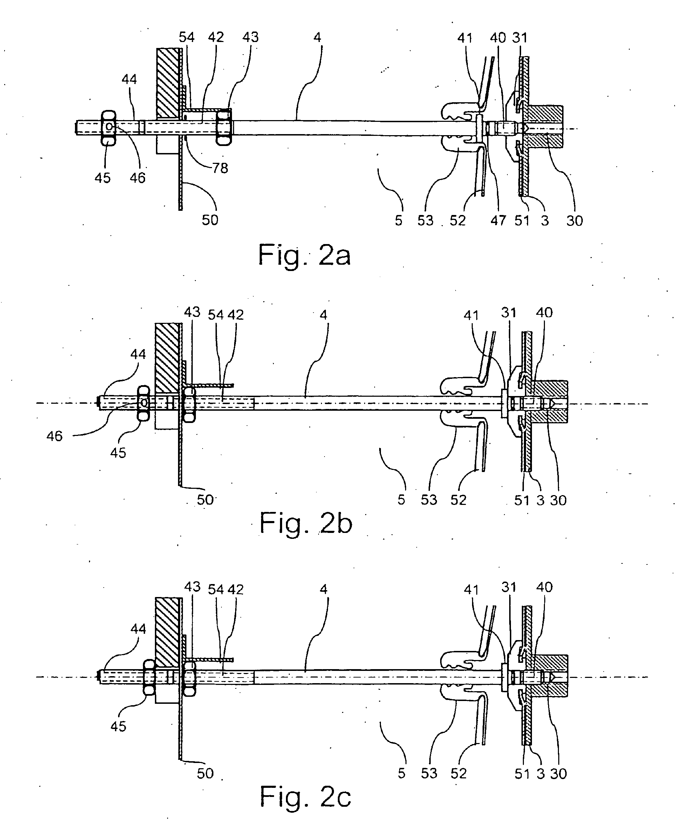

En se reportant aux figures 2a à 2c, on va donc décrire un exemple de réalisation d'un tirant de fixation selon l'invention.

La figure 2a représente un tirant 4 destiné à être monté sur le tablier 3 qui sépare le compartiment moteur 7 de la cabine 8 du conducteur. Sur cette figure, on a représenté uniquement les parties du servomoteur et du maître cylindre utiles à l'explication du système de fixation selon l'invention. On retrouve donc le servomoteur 5 avec sa jupe mobile 52 et ses parois avant 50 et arrière 51. La paroi arrière 51 est plaquée contre le tablier 3 du compartiment moteur. On retrouve également le maître cylindre 6 plaqué contre la paroi avant 50 du servomoteur.

Le tirant 4 comporte à son extrémité de droite un filetage 40 et un épaulement 41. Par ailleurs, le tablier 3 comporte un trou fileté 30 ou une pièce solidaire du tablier 3 et comportant un tel trou fileté. L'extrémité filetée 40 est destinée à être vissée dans le trou 30 jusqu'à ce que l'épaulement 41 soit en appui contre le tablier 3 (ou une rondelle d'appui 31). Le filetage 40 possède un pas à droite.

L'extrémité de gauche du tirant possède une partie filetée 42 sur laquelle est monté un écrou 43. Cet écrou est situé à l'intérieur du servomoteur. La paroi avant 50 du servomoteur possède une pièce 54 qui empêche l'écrou 43 de tourner mais ne l'empêche pas de se déplacer selon l'axe du tirant. Le filetage 42 possède un pas à gauche.

Alternativement, on peut prévoir que le filetage 40 possède un pas à gauche et le filetage 42 possède un pas à droite.

L'extrémité de gauche du tirant possède également une pièce filetée 44 dont le pas est à droite. Cette pièce a été montée en force ou vissée dans l'extrémité de gauche du tirant après que l'écrou 43 ait été monté sur le filetage 42. Sur la pièce filetée 44 est montée un écrou 45 qui est immobilisée temporairement sur cette partie filetée à l'aide, par exemple, d'une goupille cassable telle qu'une goupille.en plastique 46.

En se reportant aux figures 2a à 2c, on va donc décrire le montage du servomoteur 5 et du maître cylindre 6 sur le tablier 3 du compartiment moteur.

Sur la figure 2a, l'extrémité de droite du tirant est présentée devant le trou fileté 30.

A l'aide de l'écrou 45 qui est immobilisé sur le tirant par la goupille 46, le tirant est tourné dans le sens des aiguilles d'une montre de telle sorte que le filetage 40 est vissé dans le trou fileté 30 jusqu'à ce que l'épaulement 41 appui là paroi arrière 51 du servomoteur contre le tablier 3. Parallèlement, le filetage 42 étant à gauche, en tournant le tirant dans le sens des aiguilles d'une montre, l'écrou 42, qui est immobilisé en rotation, se déplace vers la gauche sur le tirant et se plaque contre la face intérieure de la paroi avant 50 du servomoteur. On se trouve alors dans la situation de la figure 2b. Ensuite, en continuant à serrer on accentue le serrage de la paroi arrière 51 du servomoteur contre le tablier 3 jusqu'à ce que la goupille 46 casse. L'écrou 45 peut alors tourner sur le filetage 44. En continuant à tourner cet écrou dans le sens des aiguilles d'une montre, on vient le plaquer contre le maître cylindre 6. En accentuant le serrage on bloque à la fois la paroi arrière 51 du servomoteur contre le tablier 3 et le maître cylindre contre la paroi avant 50 su servomoteur. On se trouve dans la situation illustrée par la figure 2c, le maître cylindre et le servomoteur étant fixé sur le tablier du compartiment moteur.

Il est à noter qu'avant montage, l'écrou 43 doit être positionné convenablement axialement.sur le filetage 42 (en figure 2a) pour qu'après serrage il fixe la distance entre les parois avant 50 et arrière 51 du servomoteur.

Par ailleurs, le tirant 4 traverse les parois 50 et 51 ainsi que la jupe 52. Il donc prévu sur la jupe un joint d'étanchéité 53. Il est également prévu un joint 78 entre l'écrou 43 et la paroi avant 50 du servomoteur.

De plus, on peut prévoir que l'épaulement appui sur la paroi arrière 51 du servomoteur par une rondelle 31 qui est fixée à la paroi 51. Avantageusement, on prévoit une rondelle de freinage 47 entre le tirant et la rondelle 31 pour freiner le desserrage de la partie filetée 40.

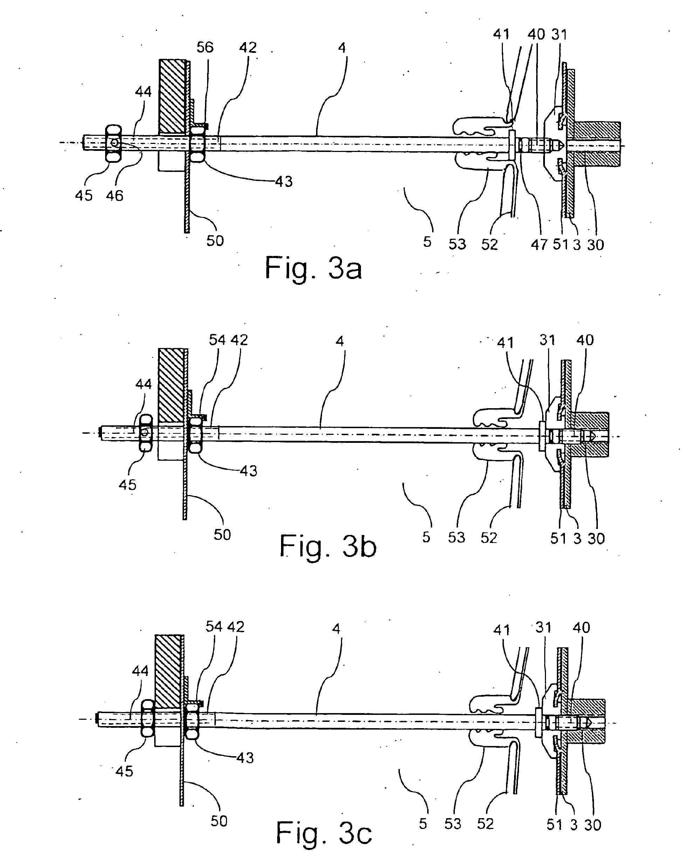

En se reportant aux figures 3a et 3b, on va décrire une variante de réalisation du système des figures 2a à 2b. Dans le système de la figure 3a, le filetage 42 a un pas à droite comme les filetage 40 et 44. Avantageusement, les filetages 42 et 44 sont donc réalisés en un même filetage dont le pas est à droite. L'écrou 43 est monté sur la partie 42 du filetage et est immobilisé en rotation et en translation par une pièce 56 solidaire de la paroi avant 50 du servomoteur. L'écrou 45 est monté sur la partie 44 du filetage et est immobilisé provisoirement par une goupille 46.

Pour monter le tirant, l'extrémité 40 est présentée devant le trou fileté 30 (figure 3a). A l'aide de l'écrou 45, on tourne le tirant de façon à visser l'extrémité filetée 40 dans le trou 30 jusqu'à ce que l'épaulement appui sur la paroi arrière 51 (figure 3b).

Ensuite, en continuant à tourner l'écrou 45, la goupille casse.. L'écrou peut tourner sur la partie filetée 44 et venir en appui sur le maître cylindre 6 pour serrer le maître cylindre contre la paroi avant 50 et contre l'écrou 43. Le système se trouve dans l'état représenté en figure 3c.

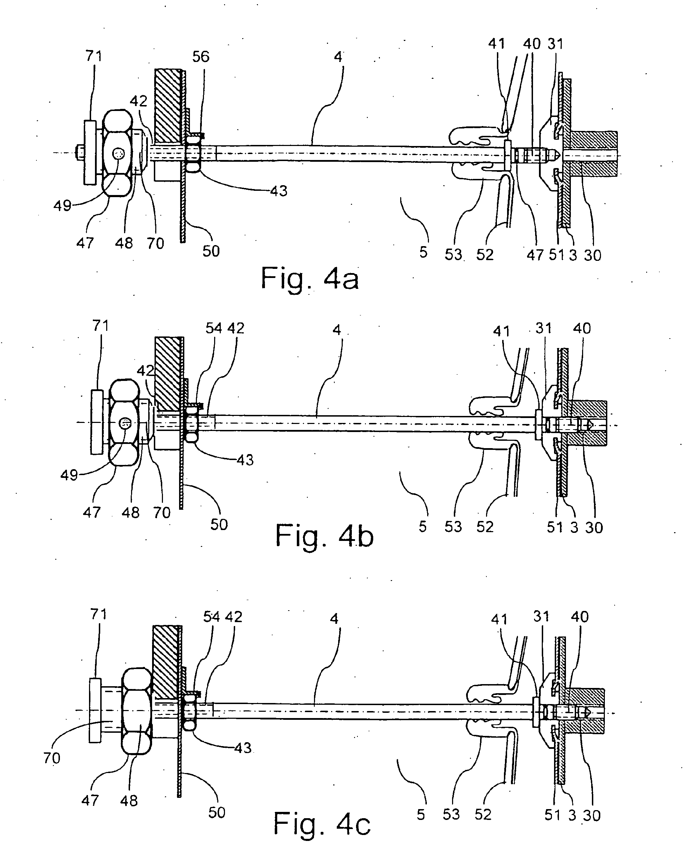

En se reportant aux figures 4a à 4c, on va maintenant décrire une autre forme de réalisation du système de l'invention.

L'extrémité de droite du tirant ainsi que le dispositif de fixation sur le tablier 3 sont les mêmes que dans les systèmes décrit précédemment en se reportant aux figures 2a à 3c.

Par contre, l'extrémité de gauche du tirant comporte un filetage 42 sur lequel est monté d'une part l'écrou 43 et une pièce 70 portant un filetage extérieur 48.

Le filetage 42 possède un pas à droite. L'écrou 43 est monté sur le filetage 42 et est immobilisé en rotation par une pièce 56.

La pièce 70 est montée vissée sur le filetage 42 ou est montée en force à l'extrémité du tirant. L'écrou 47 est monté sur le filetage 48. Le filetage 48 a également un pas à droite.

Une goupille cassable 49, en plastique par exemple, traverse transversalement de part en part l'écrou 47, la pièce filetée 70 et la partie filetée 42 (figure 4a).

On va maintenant décrire le processus de montage de ce système de fixation. L'extrémité filetée 40 du tirant est vissée dans le trou fileté 30 à l'aide de l'écrou 47 jusqu'à ce que l'épaulement 41 vienne en appui sur la paroi arrière 51 du servomoteur et jusqu'à ce que la goupille 49 casse (figure 4b). La pièce filetée est quasiment plaquée contre le maître cylindre 6. En continuant à tourner l'écrou 47, celui-ci vient en butée contre le maître cylindre 6. Il est alors possible de compléter le serrage pour obtenir la fixation désirée (figure 4c).

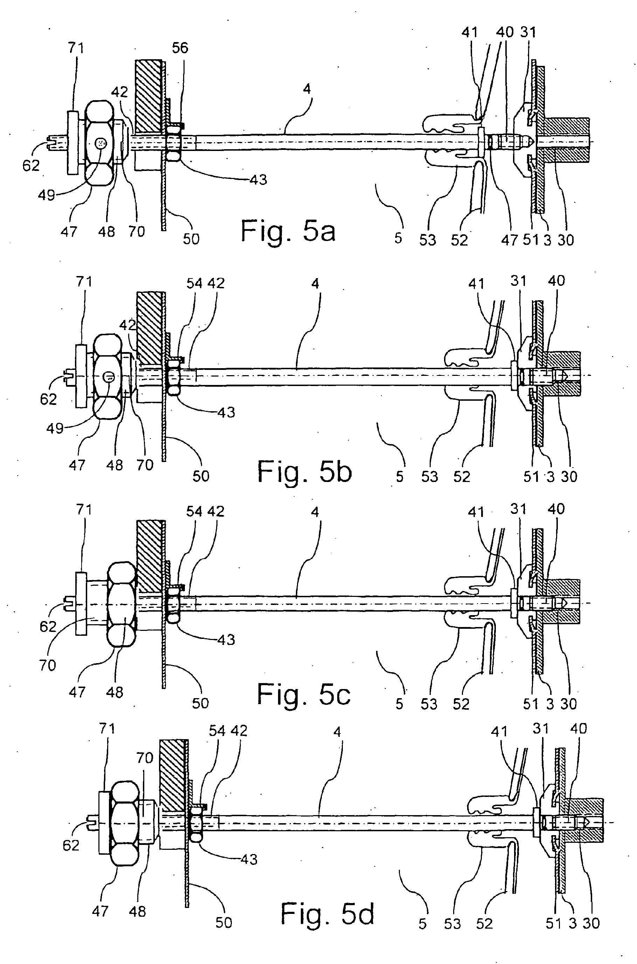

Les figures 5a à 5d représentent une variante de réalisation du système des figures 4a à 4c dans laquelle il est possible de démonter le maître cylindre 6 sans démonter le servomoteur 5.

L'extrémité de droite du tirant 4 et sa fixation dans le tablier 3 sont conçues de la même façon que précédemment décrit.

L'extrémité de gauche est quasiment conçue également de la même façon que dans la forme de réalisation des figures 4a à 4c avec la différence cependant que la tige du tirant comporte une rainure 62 permettant d'y loger l'extrémité d'un tournevis.

Le montage du système se fait de la même façon que le système des figures 4a à 4c. C'est-à-dire, l'extrémité filetée 40 du tirant est vissé dans le trou fileté 30 en utilisant l'écrou 44, puis après rupture de la goupille 49, l'écrou 47 est serré contre le maître cylindre bloquant celui-ci contre la paroi avant 50 du servomoteur.

La rainure 62 va permettre de débloquer l'écrou 47 pour démonter le maître cylindre 6. Pour expliquer ce démontage, il convient de préciser que le filetage de la pièce fileté 70 peut comporter un frein filet. De plus, la pièce filetée 70 comporte à sa partie gauche un épaulement 71.

Pour réaliser le démontage du maître cylindre, on immobilise la tige du tirant à l'aide d'un tourne vis inséré dans la fente 62, et on dévisse l'écrou 47. Celui-ci vient en butée contre l'épaulement 71 ce qui permet également de dévisser la pièce filetée 70 sur la partie filetée 42. Le maître cylindre est alors débloqué.

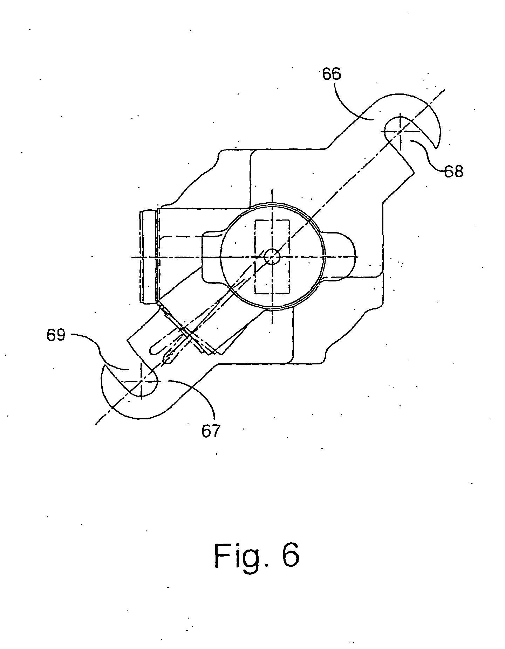

Le montage du maître cylindre peut être réalisé comme représenté en figure 6.

Le maître cylindre est solidaire d'une embase possédant deux pattes de fixation 66 et 67 situées de chaque côté du maître cylindre diamétralement opposées par rapport à l'axe du maître cylindre. Ces pattes de fixation possèdent des ouvertures 68 et 69 prévues pour se placer chacune autour d'un tirant. Ces ouvertures sont ouvertes de telle façon qu'il est possible de placer le maître cylindre contre la paroi avant 50 du servomoteur en le glissant selon l'axe du servomoteur puis en le faisant tourner de façon à placer les ouvertures 68 et 69 autour des tirants de fixation. Ensuite, sur chaque tirant, le deuxième écrou (45, 47) est serré pour bloquer le maître cylindre contre la paroi avant 50 du servomoteur.

En appliquant ce mode de montage à un système de fixation utilisant le tirant des figures 5a à 5d, on voit donc qu'il est aisé de démonter le maître cylindre sans démonter le servomoteur.

## Revendications

1. Tirant de fixation d'un servomoteur d'assistance au freinage de véhicule destiné au montage sur le tablier (3) d'un compartiment d'un véhicule, par une paroi arrière du servomoteur (51), ainsi qu'au montage d'un maître cylindre de commande de freinage (6) sur une paroi avant (50) dudit servomoteur, ledit tirant (4) étant destinée à traverser les parois avant et arrière (50, 51) du servomoteur et comportant une première extrémité destinée à être fixée audit tablier (3) du compartiment du véhicule et une deuxième extrémité destinée à permettre la fixation dudit maître cylindre (6) à la paroi avant (50) du servomoteur, la première extrémité du tirant de fixation comportant:
- un premier filetage (40) destiné à être vissé dans ledit tablier du compartiment du véhicule ou dans une pièce solidaire de cette paroi,
- un épaulement (41) destiné à être placé à l'intérieur du servomoteur et à s'appuyer contre la paroi arrière (51) du servomoteur,
et la deuxième extrémité du tirant de fixation comportant
- un deuxième filetage (42) prévu pour recevoir un premier écrou (43) destiné à être placé à l'intérieur du servomoteur et à s'appuyer contre la paroi avant (50) du servomoteur,
- un troisième filetage (44, 48) prévu pour recevoir un deuxième écrou (45) destiné à être situé à l'extérieur du servomoteur et à plaquer le maître cylindre (6) contre la paroi avant (50) du servomoteur,
**caractérisé en ce que** le deuxième filetage (42) possède un pas dont le sens est selon un premier sens et **en ce que** le premier filetage (40) et le troisième filetage ont des sens inverses au premier sens.

2. Tirant de fixation selon la revendication 1, **caractérisé en ce que** le premier écrou est destiné à être immobilisé en rotation par une pièce d'immobilisation (54) fixée sur la paroi avant (50) du servomoteur.

3. Tirant de fixation selon la revendication 2, **caractérisé en ce que** le troisième filetage (44) est réalisé sur une pièce vissée ou montée en force sur la deuxième extrémité du tirant.

4. Tirant de fixation selon la revendication 3, **caractérisé en ce que** avant montage du tirant, le premier écrou (43) est monté, sur le tirant dans une position qui permet son déplacement sur le tirant pour qu'après montage il se trouve plaqué contre la paroi avant (50) du servomoteur.

5. Tirant de fixation selon la revendication 1, **caractérisé en ce que** la position du premier écrou (43) sur le tirant, avant montage, correspond à la position que cet écrou doit avoir dans le servomoteur après montage du servomoteur sur le tablier (3) du compartiment du véhicule.

6. Tirant de fixation selon la revendication 1, **caractérisé en ce que** la pièce (70) portant le troisième filetage (48) comporte un épaulement (71) situé du côté opposé au tirant.

7. Tirant de fixation selon la revendication 1, **caractérisé en ce que** la position du premier écrou (43) sur le tirant avant montage du servomoteur correspond à la position que cet écrou doit avoir dans le servomoteur après montage du servomoteur sur le tablier (3) du compartiment du véhicule.

8. Tirant de fixation selon l'une quelconque des revendications précédentes, **caractérisé en ce qu'**il comporte un trou transversal destiné à recevoir une goupille d'immobilisation provisoire (46, 49), elle-même est destinée à traverser transversalement le deuxième écrou (45, 49) et le tirant (4) pour solidariser le deuxième écrou avec le tirant pour permettre le vissage du premier filetage (40) dans le tablier (3) du compartiment du véhicule, ladite goupille étant en matériau cassable de telle sorte, qu'au-delà d'un certain effort de vissage, elle se rompt et que le deuxième écrou est désolidarisé du tirant.

9. Servomoteur d'assistance au freinage d'un véhicule comportant un tirant de fixation selon l'une quelconque des revendications précédentes, **caractérisé en ce que** ledit tirant (4) traverse les parois avant et arrière (50, 51) du servomoteur avec la première extrémité destinée à être fixée au tablier (3) du compartiment du véhicule et la deuxième extrémité destinée à permettre la fixation dudit maître cylindre (6) à la paroi avant (50) du servomoteur ; le premier filetage (40) de la première extrémité étant destiné à être vissé dans le tablier du compartiment du véhicule ou dans une pièce solidaire de ce tablier ; l'épaulement (41) étant placé à l'intérieur du servomoteur et s'appuyant contre la paroi arrière (51) du servomoteur ; le deuxième filetage (42) de la deuxième extrémité du tirant de fixation étant prévu pour recevoir le premier écrou (43) destiné à s'appuyer, à l'intérieur du servomoteur, contre la paroi avant (50) du servomoteur ; le troisième filetage (44, 48) prévu pour recevoir le deuxième écrou (45) étant situé à l'extérieur du servomoteur et étant destiné à permettre le plaquage du maître cylindre (6) contre la paroi avant (50) du servomoteur.

10. Système de fixation comportant un tirant et/ou le servomoteur selon l'une quelconque des revendications 1 à 8, **caractérisé en ce que** le tablier (3) du compartiment du véhicule ou une pièce solidaire du tablier du compartiment du véhicule comporte un trou taraudé (30) permettant le vissage du premier filetage (40) du tirant.

11. Système de fixation selon la revendication 10, **caractérisé en ce que** le maître cylindre comporte deux pattes de fixation (66, 67) opposée par rapport à l'axe du maître cylindre et possédant chacune une ouverture (68, 69) prévue pour être placée autour du tirant de façon que le deuxième écrou du tirant puisse prendre appui sur la patte de fixation, les ouvertures (68, 69) des deux pattes de fixation étant ouvertes de façon à permettre une rotation du maître cylindre autour de son axe.

12. Procédé de montage du tirant et/ou du servomoteur et/ou du système de fixation selon l'une quelconque des revendications précédentes, **caractérisé en ce que**:
- on monte le tirant 4 dans le servomoteur avec le premier filetage (40) émergeant de la face arrière (51) du servomoteur, avec l'épaulement (41) à l'intérieur du servomoteur, avec le premier écrou (43) monté sur le deuxième filetage (42) et placé à l'intérieur du servomoteur et avec le troisième filetage émergeant de la face avant (50) du servomoteur,
- on présente l'extrémité libre du premier filetage 40 dans un trou fileté (30) du tablier (3) du compartiment du véhicule,
- on visse le premier filetage (40) dans ledit trou (30) à l'aide du deuxième écrou (45, 47) jusqu'à ce que ledit épaulement bloque la paroi arrière (51) du servomoteur contre le tablier (3) du compartiment du véhicule, le premier écrou (43) venant se plaquer contre la paroi avant (50) du servomoteur,
- on visse le deuxième écrou (45, 47) de façon à bloquer le maître cylindre et la paroi avant (50) du servomoteur contre le premier écrou (43).

13. Procédé selon la revendication 12, **caractérisé en ce que** la dernière étape de vissage du deuxième écrou (45, 47) se fait après rupture d'une goupille d'immobilisation temporaire placée en travers dudit deuxième écrou et en travers du tirant pour permettre lors du vissage du premier filetage dans le tablier du compartiment du véhicule d'utiliser le deuxième écrou comme dispositif de commande de rotation du tirant.

## Claims

1. Tie-rod for attaching a vehicle brake booster designed to be installed upon the fire wall (3) of a vehicle compartment, via a rear wall of the booster (51), and for installing a braking control master cylinder (6) on a front wall (50) of the said booster, the said tie-rod (4) being designed to pass through the front and rear walls (50, 51) of the booster and comprising a first end designed to be attached to said fire wall (3) of the vehicle compartment and a second end designed to allow the attachment of the said master cylinder (6) to the front wall (50) of the booster, the first end of the attachment tie-rod comprising:
- a first thread (40) designed to be screwed into the said fire wall of the vehicle compartment or into a part secured to this wall,
- a shoulder (41) designed to be placed inside the booster and to press against the rear wall (51) of the booster,
and the second end of the attachment tie-rod comprising:
- a second thread (42) designed to receive a first nut (43) designed to be placed inside the booster and to press against the front wall (50) of the booster,
- a third thread (44, 48) designed to receive a second nut (45) designed to be situated outside the booster and to press the master cylinder (6) against the front wall (50) of the booster,
**characterized in that** the second thread (42) has a pitch the direction of which is in a first direction and **in that** the first thread (40) and the third thread have directions that are inverse to the first direction.

2. Attachment tie-rod according to Claim 1, **characterized in that** the first nut is designed to be prevented from rotating by an immobilization part (54) attached to the front wall (50) of the booster.

3. Attachment tie-rod according to Claim 2, **characterized in that** the third thread (44) is made on a part screwed or force-mounted onto the second end of the tie-rod.

4. Attachment tie-rod according to Claim 3, **characterized in that**, before the installation of the tie-rod, the first nut (43) is installed on the tie-rod in a position which allows it to move on the tie-rod so that, after installation, it is pressed against the front wall (50) of the booster.

5. Attachment tie-rod according to Claim 1, **characterized in that** the position of the first nut (43) on the tie-rod, before installation, corresponds to the position that this nut must have in the booster after the booster is installed on the fire wall (3) of the vehicle compartment.

6. Attachment tie-rod according to claim 1, **characterized in that** the part (70) supporting the third thread (48) comprises a shoulder (71) situated on the side opposite to the tie-rod.

7. Attachment tie-rod according to Claim 1, **characterized in that** the position of the first nut (43) on the tie-rod before installation of the booster corresponds to the position that this nut must have in the booster after installation of the booster on the fire wall (3) of the vehicle compartment.

8. Attachment tie-rod according to any one of the preceding claims, **characterized in that** it comprises a through-hole designed to receive a provisional immobilization pin (46, 49), itself being designed to pass transversely through the second nut (45, 49) and the tie-rod (4) in order to secure the second nut to the tie-rod in order to allow the first thread (40) to be screwed into the fire wall (3) of the vehicle compartment, the said pin being made of a breakable material so that, beyond a certain screwing force, it breaks and the second nut is no longer secured to the tie-rod.

9. Brake booster of a vehicle comprising an attachment tie-rod according to any one of the preceding claims, **characterized in that** the said tie-rod (4) passes through the front and rear walls (50, 51) of the booster with the first end designed to be attached to the fire wall (3) of the vehicle compartment and the second end designed to allow the said master cylinder (6) to be attached to the front wall (50) of the booster; the first thread (40) of the first end being designed to be screwed into the fire wall of the vehicle compartment or into a part secured to this fire wall; the shoulder (41) being placed inside the booster and pressing against the rear wall (51) of the booster; the second thread (42) of the second end of the attachment tie-rod being designed to receive the first nut (43) designed to press, inside the booster, against the front wall (50) of the booster; the third thread (44, 48) designed to receive the second nut (45) being situated outside the booster and being designed to allow the master cylinder (6) to be pressed against the front wall (50) of the booster.

10. Attachment system comprising a tie-rod and/or the booster according to any one of Claims 1 to 8, **characterized in that** the fire wall (3) of the vehicle compartment or a part secured to the fire wall of the vehicle compartment comprises a tapped hole (30) allowing the first thread (40) of the tie-rod to be screwed in.

11. Attachment system according to Claim 10, **characterized in that** the master cylinder comprises two attachment lugs (66, 67) opposite to the axis of the master cylinder and each having an opening (68, 69) designed to be placed around the tie-rod so that the second nut of the tie-rod can press on the attachment lug, the openings (68, 69) of the two attachment lugs being open so as to allow the master cylinder to rotate around its axis.

12. Method for mounting the tie-rod and/or the booster and/or the attachment system according to any one of the preceding claims, **characterized in that**:
- the tie-rod (4) is mounted in the booster with the first thread (40) emerging from the rear face (51) of the booster, with the shoulder (41) inside the booster, with the first nut (43) mounted on the second thread (42) and placed inside the booster and with the third thread emerging from the front face (50) of the booster,
- the free end of the first thread (40) is placed in a threaded hole (30) of the fire wall (3) of the vehicle compartment,
- the first thread (40) is screwed into the said hole (30) with the aid of the second nut (45, 47) until the said shoulder locks the rear wall (51) of the booster against the fire wall (3) of the vehicle compartment, the first nut (43) pressing against the front wall (50) of the booster,
- the second nut (45, 47) is screwed so as to lock the master cylinder and the front wall (50) of the booster against the first nut (43).

13. Method according to Claim 12, **characterized in that** the last step of screwing the second nut (45, 47) is carried out after breakage of a temporary immobilization pin placed across the said second nut and across the tie-rod in order to make it possible, during the screwing of the first thread into the fire wall of the vehicle compartment, to use the second nut as a device for controlling the rotation of the tie-rod.

## Patentansprüche

1. Zugbolzen zum Befestigen eines Servomotors zur Unterstützung der Bremskraft eines Fahrzeugs, der zum Befestigen eines Servomotors an der Spritzwand (3) eines Fahrzeugs über eine Rückwand (51) des Servomotors sowie zum Anbringen eines Hauptzylinders zur Bremssteuerung (6) an einer Vorderwand (50) des Servomotors bestimmt ist, wobei der Zugbolzen (4) dazu bestimmt ist, durch die Vorder- und Rückwand (50, 51) des Servomotors hindurchzugehen und ein erstes Ende aufweist, das dazu bestimmt ist, an der Spritzwand (3) des Fahrzeugs befestigt zu sein, und ein zweites Ende, das dazu bestimmt ist, das Befestigen des Hauptzylinders (6) an der Vorderwand (50) des Servomotors zu ermöglichen, wobei das erste Ende des Befestigungszugbolzens Folgendes aufweist:
- ein erstes Gewinde (40), das dazu bestimmt ist, in die Spritzwand des Fahrzeugs oder in einen mit dieser Wand fest verbundenen Teil eingeschraubt zu sein,
- eine Schulter (41), die dazu bestimmt ist, innerhalb des Servomotors angeordnet zu sein und sich gegen die Rückwand (51) des Servomotors abzustützen,
und wobei das zweite Ende des Befestigungszugbolzens Folgendes aufweist:
- ein zweites Gewinde (42), das dazu vorgesehen ist, eine erste Mutter (43) aufzunehmen, die dazu bestimmt, innerhalb des Servomotors angeordnet zu sein und sich gegen die Vorderwand (50) des Servomotors abzustützen,
- ein drittes Gewinde (44, 48), das dazu vorgesehen ist, eine zweite Mutter (45) aufzunehmen, die dazu bestimmt ist, außerhalb des Servomotors angeordnet zu sein und den Hauptzylinder (6) gegen die Vorderwand (50) des Servomotors anzulegen,
**dadurch gekennzeichnet, dass** das zweite Gewinde (42) eine Gewindesteigung besitzt, deren Richtung in einer ersten Richtung verläuft, und dass das erste Gewinde (40) und das dritte Gewinde Richtungen haben, die der ersten Richtung entgegengesetzt sind.

2. Befestigungszugbolzen nach Anspruch 1, **dadurch gekennzeichnet, dass** die erste Mutter dazu bestimmt ist, durch ein Festlegungsteil (54) in Drehung festgelegt zu werden, das an der Vorderwand (50) des Servomotors befestigt ist.

3. Befestigungszugbolzen nach Anspruch 2, **dadurch gekennzeichnet, dass** das dritte Gewinde (44) an einem Teil ausgebildet ist, das am zweiten Ende des Zugbolzens geschraubt oder mit Kraft angebracht ist.

4. Befestigungszugbolzen nach Anspruch 3, **dadurch gekennzeichnet, dass** vor dem Anbringen des Zugbolzens die erste Mutter (43) am Zugbolzen in einer Stellung angebracht ist, die ihre Bewegung am Zugbolzen ermöglicht, damit sie sich nach dem Anbringen gegen die Vorderwand (50) des Servomotors in Anlage befindet.

5. Befestigungszugbolzen nach Anspruch 1, **dadurch gekennzeichnet, dass** vor dem Anbringen die Stellung der ersten Mutter (43) am Zugbolzen der Stellung entspricht, die diese Mutter im Servomotor nach dem Anbringen des Servomotors an der Spritzwand (3) des Fahrzeugs einnehmen soll.

6. Befestigungszugbolzen nach Anspruch 1, **dadurch gekennzeichnet, dass** der Teil (70), der das dritte Gewinde (48) trägt, eine Schulter (71) aufweist, die an der dem Zugbolzen gegenüberliegenden Seite angeordnet ist.

7. Befestigungszugbolzen nach Anspruch 1, **dadurch gekennzeichnet, dass** vor dem Anbringen des Servomotors die Stellung der ersten Mutter (43) am Zugbolzen der Stellung entspricht, die diese Mutter im Servomotor nach dem Anbringen des Servomotors an der Spritzwand (3) des Fahrzeugs einnehmen soll.

8. Befestigungszugbolzen nach einem der vorhergehenden Ansprüche, **dadurch gekennzeichnet, dass** er ein Querloch aufweist, das dazu bestimmt ist, einen provisorischen Festlegungszapfen (46, 49) aufzunehmen, der selbst dazu bestimmt ist, quer durch die zweite Mutter (45, 49) und durch den Zugbolzen (4) hindurchzugehen, um die zweite Mutter mit dem Zugbolzen fest zu verbinden, um das Einschrauben des ersten Gewindes (40) in die Spritzwand (3) des Fahrzeugs zu ermöglichen, wobei der Zapfen aus einem zerbrechlichen Material besteht, so dass er über eine bestimmte Schraubkraft hinaus bricht und die zweite Mutter vom Zugbolzen getrennt ist.

9. Servomotor zur Unterstützung der Bremskraft eines Fahrzeugs, mit einem Befestigungszugbolzen nach einem der vorhergehenden Ansprüche, **dadurch gekennzeichnet, dass** der Zugbolzen (4) die Vorder- und Rückwand (50, 51) des Servomotors mit dem ersten Ende, das dazu bestimmt ist, an der Spritzwand (3) des Fahrzeugs befestigt zu sein, und mit dem zweiten Ende, das dazu bestimmt ist, das Befestigen des Hauptzylinders (6) an der Vorderwand (50) des Servomotors zu ermöglichen, durchquert, wobei das erste Gewinde (40) des ersten Endes dazu bestimmt ist, in die Spritzwand des Fahrzeugs oder in einen mit dieser Spritzwand fest verbundenen Teil eingeschraubt zu sein, wobei die Schulter (41) innerhalb des Servomotors angeordnet ist und sich gegen die Rückwand (51) des Servomotors abstützt, wobei das zweite Gewinde (42) des zweiten Endes des Befestigungsbolzens dazu vorgesehen ist, die erste Mutter (43) aufzunehmen, die dazu bestimmt, sich innerhalb des Servomotors gegen die Vorderwand (50) des Servomotors abzustützen, wobei das dritte Gewinde (44, 48), das dazu vorgesehen ist, die zweite Mutter (45) aufzunehmen, außerhalb des Servomotors angeordnet ist und dazu bestimmt ist, den Hauptzylinder (6) gegen die Vorderwand (50) des Servomotors anzulegen.

10. Befestigungssystem mit einem Zugbolzen und/oder den Servomotor nach einem der Ansprüche 1 bis 8, **dadurch gekennzeichnet, dass** die Spritzwand (3) des Fahrzeugs oder ein mit der Spritzwand (3) des Fahrzeugs fest verbundene Teil ein Loch (30) mit Innengewinde aufweist, das das Einschrauben des ersten Gewindes (40) des Zugbolzens ermöglicht.

11. Befestigungssystem nach Anspruch 10, **dadurch gekennzeichnet, dass** der Hauptzylinder zwei Befestigungslaschen (66, 67) aufweist, die bezüglich der Achse des Hauptzylinders entgegengesetzt sind und jeweils eine Öffnung (68, 69) aufweisen, die dazu vorgesehen ist, um den Zugbolzen herum angeordnet zu sein, so dass die zweite Mutter des Zugbolzens sich an der Befestigungslasche abstützen kann, wobei die Öffnungen (68, 69) der beiden Befestigungslaschen offen sind, so dass der Hauptzylinder um seine Achse drehen kann.

12. Verfahren zum Anbringen des Zugbolzens und/oder des Servomotors und/oder des Befestigungssystems nach einem der vorhergehenden Ansprüche, **dadurch gekennzeichnet, dass**
- der Zugbolzen (4) im Servomotor mit einem ersten Gewinde (40), der aus der Rückseite (51) des Servomotors hervortritt, mit der Schulter (41) innerhalb des Servomotors, mit der ersten Mutter (43), die auf dem zweiten Gewinde (42) aufgesetzt und innerhalb des Servomotors angeordnet ist, und mit dem dritten Gewinde, der aus der Vorderseite (50) des Servomotors hervortritt, angebracht wird,
- das freie Ende des ersten Gewindes (40) in ein Loch (30) mit Innengewinde der Spritzwand (3) des Fahrzeugs eingeführt wird,
- das erste Gewinde (40) in das Loch (30) mit Hilfe der zweiten Mutter (45, 47) eingeschraubt wird, bis die Schulter die Rückwand (51) des Servomotors gegen die Spritzwand (3) des Fahrzeugs blockiert, wobei die erste Mutter (43) gegen die Vorderwand (50) des Servomotors in Anlage kommt,
- die zweite Mutter (45, 47) so eingeschraubt wird, dass der Hauptzylinder und die Vorderwand (50) des Servomotors gegen die erste Mutter (43) blockiert.

13. Verfahren nach Anspruch 12, **dadurch gekennzeichnet, dass** der letzte Schritt des Einschraubens der zweiten Mutter (45, 47) nach dem Bruch eines provisorischen Festlegungszapfens erfolgt, der quer zur zweiten Mutter und quer zum Zugbolzen angeordnet ist, um beim Einschrauben des ersten Gewindes in die Spritzwand (3) des Fahrzeugs das Verwenden der zweiten Mutter als Vorrichtung zum Steuern der Drehung des Zugbolzens zu ermöglichen.
